(19) **Europäisches Patentamt**
**European Patent Office**
**Office européen des brevets**

(11) **EP 4 782 391 A1**

(12) **EUROPEAN PATENT APPLICATION**
published in accordance with Art. 153(4) EPC

(43) Date of publication:
**29.07.2026 Bulletin 2026/31**

(21) Application number: **24866604.2**

(22) Date of filing: **02.09.2024**

(51) International Patent Classification (IPC):
**B82B 3/00** (2006.01)    **B82Y 10/00** (2011.01)
**G02B 21/32** (2006.01)    **G02F 1/01** (2006.01)

(52) Cooperative Patent Classification (CPC):
**B82B 3/00; B82Y 10/00; G02B 21/32; G02F 1/01**

(86) International application number:
**PCT/JP2024/031511**

(87) International publication number:
**WO 2025/063038 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **20.09.2023 JP 2023152361**
**25.12.2023 JP 2023217754**

(71) Applicant: **Inter-University Research Institute
Corporation
National Institutes of Natural Sciences
Tokyo 181-8588 (JP)**

(72) Inventors:
• **DE LESELEUC Sylvain**
  **Okazaki-shi, Aichi 444-8585 (JP)**
• **OHMORI Kenji**
  **Okazaki-shi, Aichi 444-8585 (JP)**
• **TOMITA Takafumi**
  **Okazaki-shi, Aichi 444-8585 (JP)**

(74) Representative: **Hautier IP - MC/EP
17, avenue Albert II
C/Ọ The Office & Co - L'ALBU
98000 Monaco (MC)**

(54) **LASER CONTROL DEVICE, OPTICAL TWEEZERS GENERATION SYSTEM, LASER CONTROL METHOD, OPTICAL TWEEZERS GENERATION METHOD, AND PROGRAM**

(57)    A laser control device that is configured to control a phase of light output from a spatial light modulator configured to generate an optical tweezers array, based on a vibration frequency of a microparticle trapped by the optical tweezers array.

FIG. 1

**Description**

TECHNICAL FIELD

The present invention relates to a laser control device, an optical tweezers generation system, a laser control method, an optical tweezers generation method, and a program.

Priority is claimed on Japanese Patent Application No. 2023-152361, filed September 20, 2023 and Japanese Patent Application No. 2023-217754, filed December 25, 2023, the contents of which are incorporated herein by reference.

BACKGROUND ART

There is a technique called optical tweezers for trapping microparticles such as atoms by focusing laser light. A plurality of optical tweezers disposed in an array are referred to as an optical tweezers array. The optical tweezers array is used, for example, in a cold-atom quantum computer to individually trap and arrange a plurality of atoms.

The cold-atom quantum computer is characterized in that the cold-atom quantum computer cools an atomic gas using laser light and uses the cooled atomic gas as quantum bits. The optical tweezers are a technique that can be used to trap the cooled atoms.

When a plurality of atoms are individually arranged using the optical tweezers array, for example, the phase of the laser light emitted to form the optical tweezers array is controlled by a spatial light modulator, and the light intensity distribution on the focal plane is controlled to be the collection of focal points arranged in an array. **In** addition, each optical tweezer traps an individual atom. By making the central intensity of each optical tweezer uniform, the potential depth for trapping atoms constituting the quantum bits can be made constant, and the variation in the atomic trapping probability or the energy difference between the internal states of the atoms can be reduced. For example, Non-Patent Document 1 discloses that the central intensity of an optical tweezers array is made uniform.

Citation List

Non Patent Document

Non-Patent Document 1: F. Nogrette, H. Labuhn, S. Ravets, D. Barredo, L. Beguin, A. Vernier, T. Lahaye, and A. Browaeys, "Single-Atom Trapping in Holographic 2D Arrays of Microtraps with Arbitrary Geometries", Phys. Rev. X 4, 021034 Published 23 May 2014

SUMMARY OF INVENTION

Technical Problem

However, even when the central intensity of each optical tweezer in the optical tweezers array is uniform, when the curvature of the light intensity distribution near the center of each optical tweezer is non-uniform, the motion of each trapped atom becomes non-uniform. When the motion of the atoms arranged in the cold-atom quantum computer is non-uniform, the initialization and the motion quantum state control become non-uniform, and the accuracy of the quantum computing is lowered, that is, there is a problem in that the quantum state after the control does not faithfully reproduce the desired quantum state in the quantum gate operation. The term "initialization" means that the atoms trapped in the optical tweezers array are placed in a predetermined energy state before being brought into a predetermined excited state. The term "motion quantum state control" means that the atoms trapped by the predetermined laser irradiation are placed in a state of being excited to a desired energy state.

**In** addition, when a large number of atoms are operated using optical tweezers having a large number of focal points and the atoms are disposed on an XY plane, there is a problem in that the arrangement of the trapped atoms also deviates from the XY plane because each focal point varies in the Z direction with respect to the plane.

An object of the present invention is to provide a laser control device, an optical tweezers generation system, a laser control method, an optical tweezers generation method, and a program for arranging an array of microparticles trapped by optical tweezers.

Solution to Problem

An aspect of the present invention relates to a control device configured to control a phase of light output from a spatial light modulator configured to generate an optical tweezers array, based on a vibration frequency of an atom trapped by optical tweezers.

Another aspect of the present invention relates to an optical tweezers generation system including: a laser light source; a focusing optical system configured to focus laser light from the laser light source to form an optical tweezers array configured to trap an atom; a measurement device configured to measure a vibration frequency of the atom based on fluorescence from the trapped atom; and a control device configured to control a phase of laser light output from a spatial light modulator disposed in the focusing optical system, based on the vibration frequency.

Still another aspect of the present invention relates to a control method including: controlling a phase of light output from a spatial light modulator configured to generate an optical tweezers array, based on a vibration frequency of an atom trapped by the optical tweezers array.

Still another aspect of the present invention relates to an optical tweezers generation method including: a step of forming an optical tweezers array configured to trap an atom by focusing laser light from a laser light source using a focusing optical system; a step of measuring a vibration frequency of the atom based on fluorescence from the atom trapped by the optical tweezers array; and a step of controlling a phase of laser light output from a spatial light modulator disposed in the focusing optical system, based on the vibration frequency.

Advantageous Effects of Invention

According to the present invention, it is possible to arrange the array of the microparticles trapped by the optical tweezers.

BRIEF DESCRIPTION OF DRAWINGS

[FIG. 1] A diagram showing the configuration of an optical tweezers generation system according to a first embodiment.
[FIG. 2] A diagram showing an optical tweezers array generated by the optical tweezers generation system.
[FIG. 3] A flowchart showing an operation of a control device according to the first embodiment.
[FIG. 4] A diagram showing an example of a light intensity distribution of the optical tweezers array before and after optimization.
[FIG. 5] A diagram showing a trap frequency (vibration frequency) of an atom trapped by the optical tweezers before control.
[FIG. 6] A diagram showing a trap frequency (vibration frequency) of an atom trapped by the optical tweezers after control.
[FIG. 7] A diagram showing the configuration of an optical tweezers generation system according to a second embodiment.
[FIG. 8] A diagram showing the principle of two-beam interferometry.
[FIG. 9] A diagram showing an example of the configuration of an interference laser.
[FIG. 10] A flowchart showing an operation of a control device according to the second embodiment.

DESCRIPTION OF EMBODIMENTS

(First Embodiment)

Hereinafter, embodiments of the present invention will be described in detail with reference to the accompanying drawings.

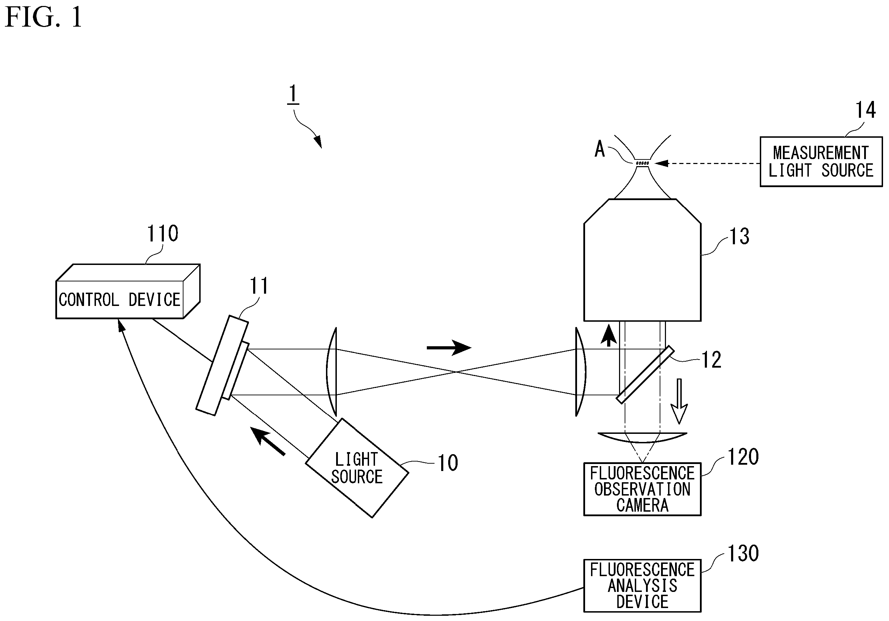

FIG. 1 is a diagram showing the configuration of an optical tweezers generation system 1 according to a first embodiment.

The optical tweezers generation system 1 according to the first embodiment includes a light source 10, a spatial light modulator 11, a control device 110, a dichroic mirror 12, a fluorescence observation camera 120, a fluorescence analysis device 130, an objective lens 13, and a measurement light source 14.

The light source 10 outputs laser light to the spatial light modulator 11.

The spatial light modulator 11 modulates a phase of the input light, and outputs the modulated light to the objective lens 13 via the dichroic mirror 12 such that the light is focused at multiple points. The phase modulated by the spatial light modulator 11 is set by a two-dimensional position of the spatial light modulator 11 that receives the light. The control device 110 controls the spatial light modulator 11 so that the phase of the light output from the spatial light modulator 11 is changed.

The dichroic mirror 12 reflects the light input from the spatial light modulator 11, and outputs the light to the objective lens 13. The objective lens 13 focuses the light input from the dichroic mirror 12 onto a focal point. Atoms can be trapped near the focal point by focusing the light. In the optical tweezers generation system 1, the spatial light modulator 11, the dichroic mirror 12, and the objective lens 13 constitute a focusing optical system.

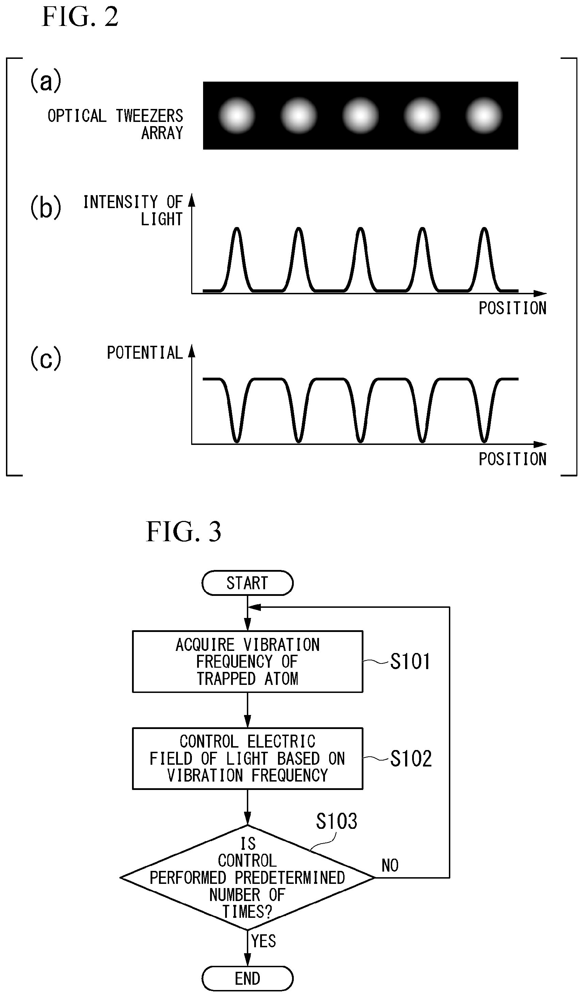

FIG. 2 is a diagram showing the optical tweezers array generated by the optical tweezers generation system 1. In FIG. 2, (a) shows an observed optical tweezers array, (b) shows the intensity of light, and (c) shows a potential. A light intensity distribution of the optical tweezers has a mountain-like shape as shown in FIG. 2. Since the atoms experience lower energy as the intensity of light increases, the potential has a valley-shaped profile. As a result, the atoms can be trapped in a region in which the potential is low. The control device 110 controls the spatial light modulator 11 to change the phase of the light output from the spatial light modulator 11 to generate the light intensity distribution of the optical tweezers as shown in FIG. 2, thereby trapping an atom A in each focusing portion.

The fluorescence observation camera 120 observes the fluorescence from the trapped atom A. The fluorescence from the atom A is transmitted through the objective lens 13 and the dichroic mirror 12, and reaches the fluorescence observation camera 120. The fluorescence analysis device 130 analyzes the fluorescence of the atom A obtained from the fluorescence observation camera 120. Atomic vibration measurement is performed, for example, by applying a Raman sideband spectroscopy technique to the atom A to measure a vibration frequency of the atom A. That is, the fluorescence observation camera 120 and the fluorescence analysis device 130 measure the vibration frequency of the atom A by causing the measurement light source 14 to irradiate the atom A with light at a plurality of frequencies to induce a Raman transition that raises the vibrational level of the atom A by one quantum, and measuring the frequency corresponding to the raised vibrational level. The fluorescence observation camera 120 and the fluorescence analysis device 130 function as measurement devices that measure the vibration frequency of the atom.

The vibration frequency of the atom A corresponds to a beam radius and the curvature of the light intensity distribution in which the atom A is trapped. The vibration frequency of the atom A is large in a case where the curvature is large, and the vibration frequency of the atom A is small in a case where the curvature is small.

As described above, when the curvature of the light intensity distribution near the center in each optical tweezer is non-uniform, the motion of each trapped atom is non-uniform. When the application to the cold-atom quantum computer is assumed, the accuracy of the quantum computing is lowered by this, so that it is very important to understand the variation in the curvature of the light intensity distribution by measuring the vibration frequency.

The control device 110 controls an electric field of the light output from the spatial light modulator 11 based on the vibration frequency of the atom A in each optical tweezer. The control device 110 controls the electric field of the light output from a specific point of the spatial light modulator 11 based on, for example, the vibration frequency of the atom A in each optical tweezer.

The vibration frequency of the atom A in each optical tweezer is changed with the change in the electric field of the light output from the spatial light modulator 11. The control device 110 may repeatedly control the electric field of the light output from the spatial light modulator 11 based on the vibration frequency of the atom A in each optical tweezer. The control device 110 may stop the control after controlling, a predetermined number of times, the electric field of the light output from the spatial light modulator 11. The control device 110 may stop the control of the electric field of the light output from the spatial light modulator 11 in a case where the vibration frequency of the atom A in each optical tweezer satisfies a predetermined condition. The case where the vibration frequency satisfies the predetermined condition is, for example, a case where the difference between the maximum value and the minimum value of the vibration frequency of the atom A in each optical tweezer is smaller than a predetermined value.

**In** this way, the case where the measured vibration frequency falls within the predetermined condition, that is, the case where the difference between the maximum value and the minimum value of the vibration frequency is smaller than the predetermined value means that the curvature of the light intensity distribution falls within the predetermined range.

The control device 110 calculates an electric field $A_{\mathrm{SLM}}(x_s, y_s)$ of the light output from a point $(x_s, y_s)$ of the spatial light modulator 11 by, for example, Expression (1), and controls the phase of the electric field of the light output from the point $(x_s, y_s)$ to be the same as the phase of the calculated electric field $A_{\mathrm{SLM}}(x_s, y_s)$.

$$A_{\mathrm{SLM}}(x_s, y_s) = \sum_m \left( a_m e^{i[\Delta_m(x_s, y_s) + \theta_m]} \times e^{-\left(\frac{x_s}{w_{x,m}}\right)^2} e^{-\left(\frac{y_s}{w_{y,m}}\right)^2} \right)$$

$$\cdots (1)$$

In Expression (1), m is the number of optical tweezers generated by the optical tweezers generation system 1. The control device 110 calculates the intensity $A_{\mathrm{SLM}}(x_s, y_s)$ of the light output from the point $(x_s, y_s)$ required for generating m optical tweezers by calculating the sum of the intensities of the light output from the point $(x_s, y_s)$ required for generating each optical tweezer on the right side of Expression (1).

In Expression (1), $w_{x,m}$ and $w_{y,m}$ are curvature adjustment values corresponding to the vibration frequency of the atom A trapped by each tweezer. For example, $w_{x,m}$ is a curvature adjustment value corresponding to the vibration frequency of the atom A in the x direction, and $w_{y,m}$ is a curvature adjustment value corresponding to the vibration frequency of the atom A in the y direction. The control device 110 increases a magnitude of $w_{x,m}$ in a case where the vibration frequency of the atom A in the x direction is smaller than a predetermined value. In addition, the control device 110 decreases the magnitude of $w_{x,m}$ in a case where the vibration frequency of the atom A in the x direction is larger than the predetermined value. The control device 110 performs the adjustment of $w_{x,m}$ for each individual optical tweezer. The control device 110 adjusts $w_{y,m}$ in the y direction in the same manner. The control device 110 calculates the intensity $A_{SLM}(x_s, y_s)$ of the light again after adjusting $w_{x,m}$ and $w_{y,m}$ in each optical tweezer. As a result, the curvature of each individual optical tweezer can be adjusted.

$a_m$ is an amplitude adjustment value adjusted such that the central intensity of each optical tweezer is constant. The control device 110 adjusts $a_m$ such that the electric field amplitude at the center position of each optical tweezer is constant. As a result, the control device 110 can keep the magnitude of the central intensity of the optical tweezers constant even after adjusting the curvature of the optical tweezers.

Further, $\Delta_m(x_s, y_s)$ is a phase of the light output from the point $(x_s, y_s)$ that generates the optical tweezer m, and $\theta_m$ is a phase added to prevent interference between the optical tweezers.

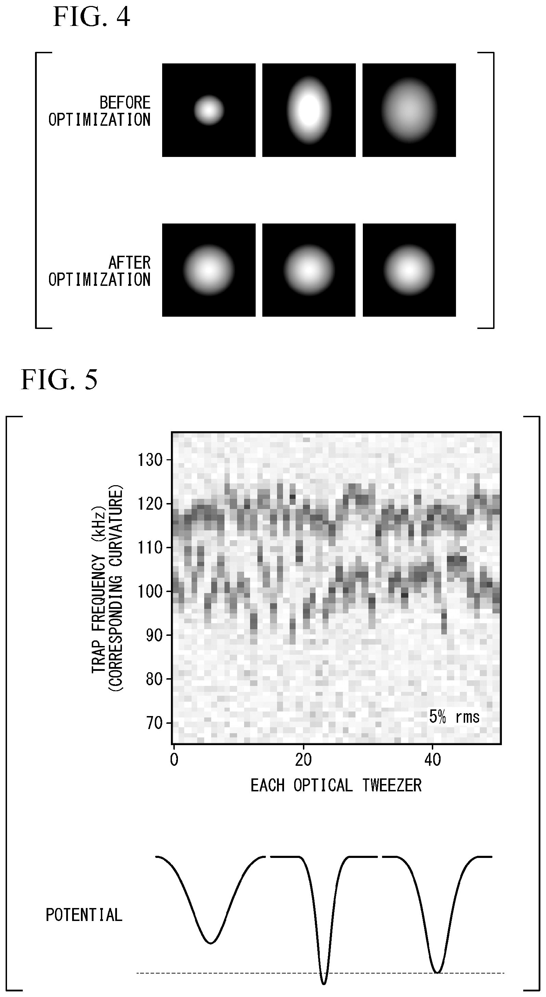

FIG. 3 is a flowchart showing an operation of the control device 110 according to the first embodiment. The control device 110 acquires the vibration frequency of the atom A trapped in each optical tweezer (step S101). The control device 110 controls the electric field of the light output from the spatial light modulator 11, based on the vibration frequency (step S102). When the control is performed a predetermined number of times (step S103: YES), the control device 110 ends the operation. When the control is not performed a predetermined number of times (step S103: NO), the control device 110 performs the operation of step S101 again. By repeating the above-described steps, as shown in FIG. 4, the optical tweezers array in which the central intensity and the curvature are made uniform is generated.

(Example 1)

Hereinafter, an example of the first embodiment will be described.

A system having the same configuration as the optical tweezers generation system 1 according to the first embodiment was constructed.

A laser light source having a wavelength of 850 nm was used as the light source 10. A liquid crystal spatial light modulator having $800 \times 600$ pixels was used as the spatial light modulator 11. A mirror having characteristics of the reflectance of 99% at a wavelength of 850 nm and the transmittance of 95% or more at a wavelength of 780 nm was used as the dichroic mirror 12. A camera having high-sensitivity characteristics in visible light was used as the fluorescence observation camera 120, the objective lens 13 was set to NA 0.75, and laser light having a wavelength of 795 nm was used as the measurement light source 14. A device capable of analyzing a trap frequency corresponding to an energy transition of an atom by a Raman sideband spectroscopy technique was used as the fluorescence analysis device 130.

The atoms to be trapped were rubidium (Rb), the vacuum chamber held at room temperature was filled with Rb atoms, and the Rb atoms were trapped by the optical tweezers array generated by the optical tweezers generation system.

The control device 110 calculated the electric field $A_{SLM}(x_s, y_s)$ of the light output from the point $(x_s, y_s)$ of the spatial light modulator **11** by Expression (1), and controlled the spatial light modulator **11** to output the calculated electric field of the light.

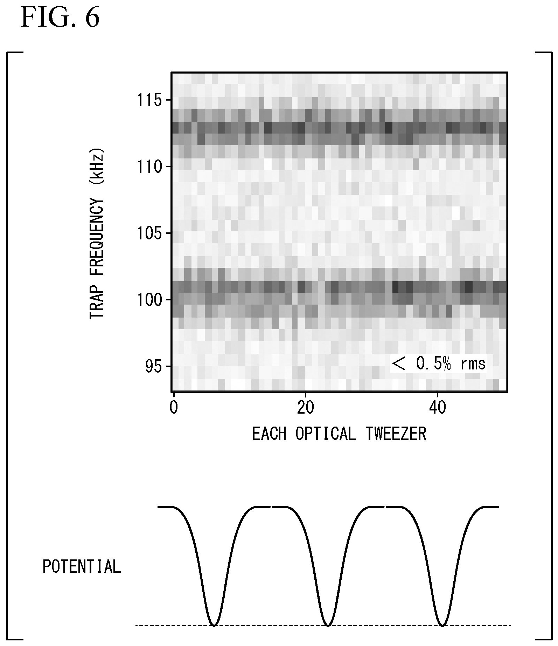

FIG. 5 is a diagram showing an example of the trap frequency (vibration frequency) and the potential shape of the atoms trapped by the optical tweezers before the control. FIG. 6 is a diagram showing an example of the trap frequency (vibration frequency) and the potential shape of the atom trapped by the optical tweezers after the control by the control device **110** according to the embodiment of the present invention. **In** FIGS. 5 and 6, a horizontal axis indicates the number assigned to each optical tweezer, and a vertical axis indicates the trap frequency of the atom trapped by each optical tweezer.

Before the control, the root mean square (RMS) of the trap frequency was about 5%, whereas after the control by the control device **110** according to the embodiment of the present invention, the RMS of the trap frequency was 0.5% or less. As a result, the trap frequency of the atom, that is, the curvature of the light intensity distribution of the optical tweezers could be made uniform by the method described in the present embodiment.

(Second Embodiment)

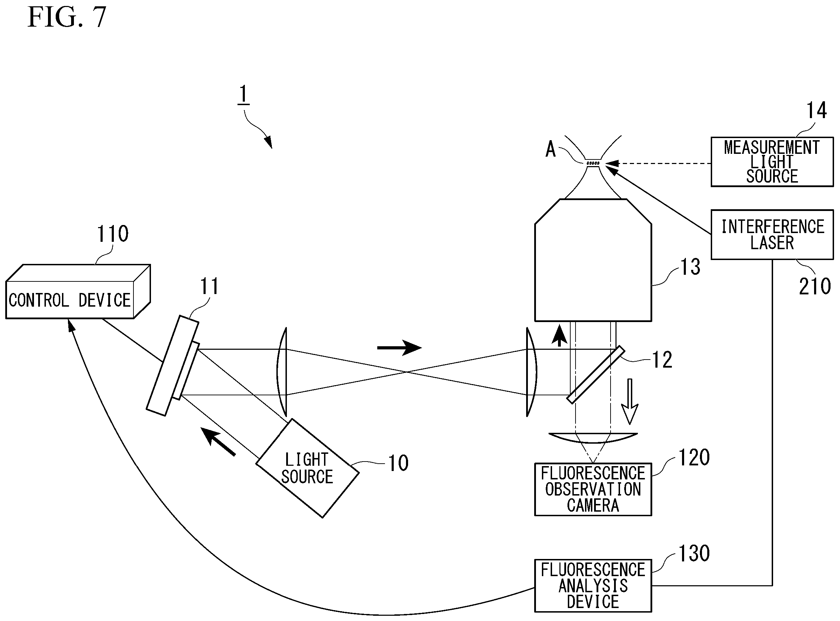

FIG. 7 is a diagram showing the configuration of an optical tweezers generation system 1 according to a second embodiment. The optical tweezers generation system 1 according to the second embodiment further includes an interference laser 210 in addition to the optical tweezers generation system 1 according to the first embodiment.

In the second embodiment, the atoms A are disposed in an XY plane. A direction perpendicular to the XY plane is defined as a Z direction. The interference laser 210 irradiates the XY plane on which the atoms are disposed with two beams of laser light in an oblique direction from above in the Z direction and below in the Z direction. The interference laser 210, the fluorescence observation camera 120, and the fluorescence analysis device 130 calculate a position of the atom in the Z direction by the two-beam interferometry.

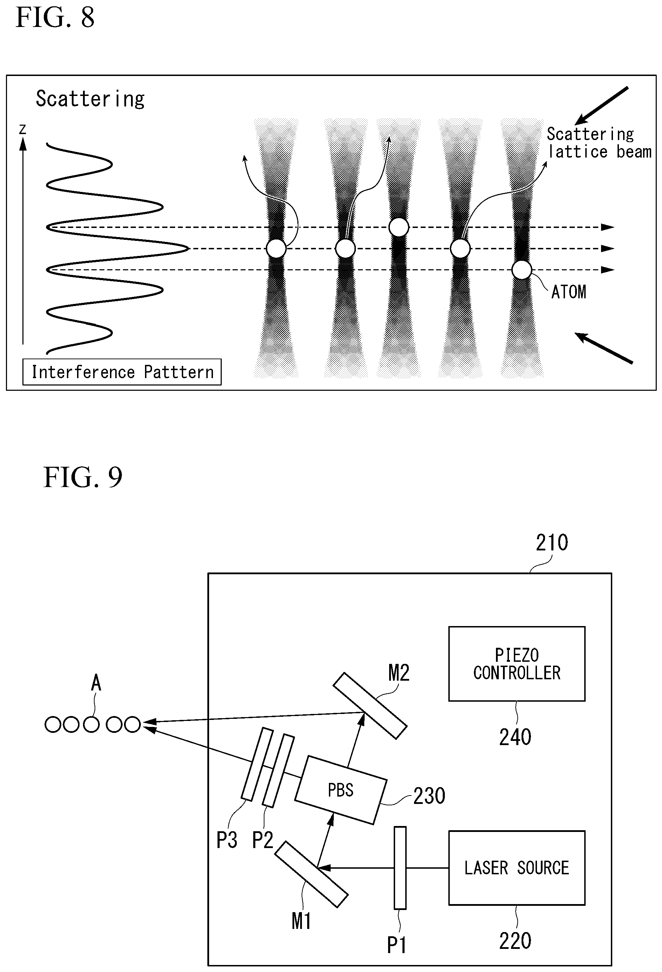

FIG. 8 is a diagram showing the principle of the two-beam interferometry. As shown in FIG. 7, the interference laser 210 irradiates the XY plane on which the atom is disposed with two beams of laser light in an oblique direction from above in the Z direction and below in the Z direction. By the irradiation with the laser light, an interference-fringe intensity pattern that uniformly spreads along the XY plane and whose intensity periodically changes in the Z direction is generated.

The atom absorbs the laser light and emits fluorescence by the irradiation with the laser light. The atom irradiated with the laser light having a strong intensity emits strong fluorescence, and conversely, the atom irradiated with the laser light having a low intensity emits weak fluorescence. Here, in a case where the interference-fringe intensity pattern is scanned in the Z direction, the fluorescence from the atom is generated in accordance with a change in intensity of the interference fringe. Therefore, the position of the atom in the Z direction can be calculated by synchronizing a Z direction component of the interference-fringe intensity pattern with the fluorescence from the atom.

For example, a case is considered in which a certain atom A is slightly shifted in the Z direction from other atoms. When the maximum interference-fringe intensity pattern is at $Z = 0$, the fluorescence from the other atoms is maximum, and the fluorescence from the atom A is reduced to $1/a$ as compared with the fluorescence from the other atoms, and in a case where the maximum interference-fringe intensity pattern is at $Z = \Delta L$, the fluorescence from the atom A is maximum, and the fluorescence from the other atoms is reduced to $1/a$ of the fluorescence from the atom A. In this case, it is calculated that the atom A is shifted by $\Delta L$ in the Z direction from the other atoms.

The interference laser 210 scans the interference-fringe intensity pattern in the Z direction, and the fluorescence observation camera 120 and the fluorescence analysis device 130 according to the second embodiment measure the intensity of the changing interference fringe. The position of the atom A in the Z direction is calculated by synchronizing the position in the Z direction scanned by the interference laser 210 with the intensity of the interference fringe measured by the fluorescence observation camera 120 and the fluorescence analysis device 130. In the second embodiment, the fluorescence observation camera 120 and the fluorescence analysis device 130 also function as measurement devices that measure the position of the atom in the Z direction, in addition to the measurement devices that measure the vibration frequency of the atom.

The interference laser 210 splits the laser light output from the laser source into two beams and adjusts the direction of each laser light. FIG. 9 is a diagram showing an example of a configuration of the interference laser 210. The interference laser 210 includes a laser source 220, a polarizing beam splitter (PBS) 230, a piezo controller 240, mirrors M1 and M2, and wave plates P1 to P3.

The laser source 220 outputs the laser light. The laser light output from the laser source 220 is reflected by the mirror M1 and split into two beams of laser light by the PBS 230. One laser light is reflected by the mirror M2 and output to the arrangement of the atoms A, whereas the other laser light is directly output to the arrangement of the atoms A. The angle of the mirror M2 is controlled by the piezo controller 240, and the position of the interference-fringe intensity pattern formed by the irradiation with the laser light is adjusted. The wave plates P1 to P3 are provided on a path of the laser light, and a polarization state of the laser light is changed.

The control device 110 according to the second embodiment controls the electric field of the light output from the spatial light modulator 11 based on the position of the atom in the Z direction, in addition to the vibration frequency of the atom A in each optical tweezer.

The vibration frequency and the position of the atom A in the Z direction in each optical tweezer are changed with the change in the electric field of the light output from the spatial light modulator 11. The control device 110 may repeatedly control the electric field of the light output from the spatial light modulator 11, based on the vibration frequency and the position of the atom A in the Z direction in each optical tweezer. The control device 110 may stop the control after controlling, a predetermined number of times, the electric field of the light output from the spatial light modulator 11. The control device 110 may stop the control of the electric field of the light output from the spatial light modulator 11 in a case where the vibration frequency and the position of the atom A in the Z direction in each optical tweezer satisfy a predetermined condition. The case where the vibration frequency satisfies the predetermined condition is, for example, a case where a difference between the maximum value and the minimum value of the vibration frequency of the atom A in each optical tweezer is smaller than a predetermined value and/or the maximum value of the difference in the position in the Z direction is smaller than a predetermined value.

The control device 110 calculates the electric field $A_{SLM}(x_s, y_s)$ of the light output from the point $(x_s, y_s)$ of the spatial light modulator **11** by, for example, Expression (2) in which a factor indicating the shift in the Z direction is added to Expression (1), and controls the phase of the electric field of the light output from the point $(x_s, y_s)$ to be the same as the phase of the calculated electric field $A_{SLM}(x_s, y_s)$.

$$A_{SLM}(x_s, y_s) = \sum \left( a_m e^{\,i[\Delta_m(x_s,y_s)+\theta_m]} \right.$$
$$\times\ e^{-(x_s/w_{x,m})^2}\ e^{-(y_s/w_{y,m})^2}$$
$$\left. \times\ e^{([\pi z_m/\lambda f^2]\,(x_s^2 + y_s^2))} \right)$$

$$\cdots (2)$$

In Expression (2), the definitions of characters other than $\lambda$, f, $z_m$, and $\pi$ are the same as those in Expression (1). In Expression (2), $\lambda$ is a wavelength of the laser light output from the interference laser 210. f is an effective focal length from the spatial light modulator 11 to the arrangement of the atoms A. $z_m$ is a position of each atom A trapped by the optical tweezers in the z direction. Further, $\pi$ is the circular constant.

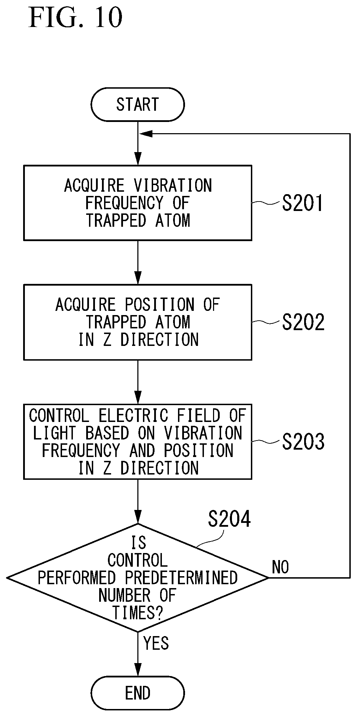

FIG. 10 is a flowchart showing an operation of the control device 110 according to the second embodiment. The control device 110 acquires the vibration frequency of the atom A trapped in each optical tweezer (step S201). The control device 110 acquires the position of the atom A trapped in each optical tweezer in the Z direction (step S202). The control device 110 controls the electric field of the light output from the spatial light modulator 11 based on the vibration frequency and the position in the Z direction (step S203). The control device 110 controls the electric field of the light output from the spatial light modulator 11 by, for example, adjusting the curvature adjustment values $w_{x,m}$ and $w_{y,m}$ and the amplitude adjustment value $a_m$.

When the control is performed a predetermined number of times (step S204: YES), the control device 110 ends the operation. When the control is not performed a predetermined number of times (step S204: NO), the control device 110 performs the operation of step S201 again. When the control device 110 performs steps S201 and S202 again, the electric field of the light output from the spatial light modulator 11 is controlled in step S203, so that the vibration frequency and the position of the atom A in the Z direction are changed. By repeating the above-described steps, the optical tweezers array in which the central intensity and the curvature are made uniform is generated, and the deviation of the positions of the atoms A trapped by the optical tweezers in the Z direction is reduced.

(Example 2)

Hereinafter, an example of the second embodiment will be described.

A system having the same configuration as the optical tweezers generation system 1 according to the second embodiment was constructed.

The conditions other than the interference laser 210, the control device **110,** the fluorescence observation camera 120, and the fluorescence analysis device 130 were the same as the conditions in the example of the first embodiment.

The interference laser 210 scanned the interference-fringe intensity pattern in the Z direction, and the intensity of the changing interference fringe was measured by the fluorescence observation camera 120 and the fluorescence analysis device 130, thereby calculating the deviation amount of the atom A in the Z direction.

The control device 110 calculated the electric field $A_{SLM}(x_s, y_s)$ of the light output from the point $(x_s, y_s)$ of the spatial light modulator **11** by using Expression (2), and controlled the spatial light modulator **11** to output the calculated electric field of the light.

The standard deviation of the positions of the rubidium atoms arranged in the two-dimensional plane in the Z direction was reduced from 130 nm to 70 nm by controlling the control device 110. As a result, in the optical tweezers generation system 1 according to the second embodiment, the deviation of the arranged atoms A in the Z direction could be reduced.

The optical tweezers generation system 1 according to the second embodiment adjusts the curvature of the optical tweezers and adjusts the position of the atom A in the Z direction, but may adjust only the position in the Z direction without adjusting the curvature of the optical tweezers. In this case, the optical tweezers generation system 1 according to the second embodiment need not include the measurement light source 14. In this case, the fluorescence observation camera 120 and the fluorescence analysis device 130 according to the second embodiment need not measure the vibration frequency of the atom. In this case, the control device 110 according to the second embodiment calculates the electric field $A_{SLM}(x_s, y_s)$ of the light output from the point $(x_s, y_s)$ of the spatial light modulator 11 by using Expression (3), and controls the phase of the electric field of the light output from the point $(x_s, y_s)$ of the spatial light modulator 11 to be the same as the phase of the calculated electric field $A_{SLM}(x_s, y_s)$.

$$A_{SLM}(x_s, y_s) = \sum \left( a_m e^{i[\Delta_m(x_s, y_s) + \theta_m]} \times e^{([\pi z_m/\lambda f^2](x_s^2 + y_s^2))} \right)$$

$$\cdots (3)$$

The control device 110 according to the second embodiment controls the phase of the electric field of the light output from the point $(x_s, y_s)$ of the spatial light modulator 11 to be the same as the phase of the electric field $A_{SLM}(x_s, y_s)$ calculated by Expression (3), so that the position of the atom A in the Z direction fluctuates, and the phase of the electric field $A_{SLM}(x_s, y_s)$ calculated by Expression (3) changes. As a result, the position of the atom A in the Z direction is adjusted.

As described above, the optical tweezers generation system 1 according to the second embodiment can reduce the deviation between the atoms in the Z direction and arrange the atoms in a plane by controlling the electric field of the light for generating the optical tweezers based on the position of the atom trapped by the optical tweezers in the Z direction.

According to the first embodiment or the second embodiment, the optical tweezers generation system 1 controls the phase of the light output from the spatial light modulator 11 that generates the optical tweezers array, based on the physical quantity of the atom A trapped by the optical tweezers array. The optical tweezers generation system 1 according to the first embodiment controls the phase of the light output from the spatial light modulator 11 that generates the optical tweezers array, based on the vibration frequency as the physical quantity of the atom A. The optical tweezers generation system 1 according to the second embodiment controls the phase of the light output from the spatial light modulator 11 that generates the optical tweezers array, based on the position in the Z direction as the physical quantity of the atom A.

According to the first embodiment or the second embodiment, the optical tweezers generation system 1 can make the curvature of the light intensity distribution of the optical tweezers uniform or reduce the deviation of the atoms arranged in the XY plane in the Z direction, and can arrange the atoms trapped by the optical tweezers.

<Other Embodiments>

Although the embodiments of the present invention have been described in detail with reference to the accompanying drawings, the specific configuration is not limited to the above-described configurations, and various design changes and the like can be made without departing from the gist of the present invention.

The optical tweezers in the present embodiment trap the atoms, but the trapping target is not limited to the atoms. For example, microparticles such as nanoparticles or bacteria may be objects to be trapped.

The dichroic mirror 12 may be changed to a device having an equivalent function. The dichroic mirror 12 may be, for example, a beam splitter or a half mirror.

In the present embodiment, the vibration of the atom is measured by the fluorescence observation camera 120 and the fluorescence analysis device 130, but the method of measuring the vibration is not limited to this. For example, the vibration may be measured from the intensity distribution of the optical tweezers array trapped by the camera or from scattered light from the trapped microparticle.

A part or all of the control device 110 in the above-described embodiments may be realized by a computer. In such a case, a program for realizing the function may be recorded on a computer-readable recording medium, and the program recorded on the recording medium may be read into a computer system and executed to realize the function. The term "computer system" includes an OS or hardware such as a peripheral device. In addition, the term "computer-readable recording medium" refers to a portable medium such as a flexible disk, a magneto-optical disk, a ROM, or a CD-ROM, or a storage device such as a hard disk built in the computer system. Further, the term "computer-readable recording medium" may also include a medium that dynamically holds a program for a short period of time, such as a communication line in a case of transmitting a program via a network such as the Internet or a communication line such as a telephone line, or a medium that holds a program for a certain period of time, such as a volatile memory inside a computer system that is a server or a client in such a case. In addition, the above-described program may be a program for realizing a part of the above-described functions, and the above-described functions may be realized in combination with a program that has already been recorded in the computer system. Further, a part or all of the control device 110 may be realized by using a programmable logic device such as a field programmable gate array (FPGA).

INDUSTRIAL APPLICABILITY

According to the present invention, it is possible to arrange the array of the microparticles trapped by the optical tweezers.

REFERENCE SIGNS LIST

1 Optical tweezers generation system
10 Light source
11 Spatial light modulator
110 Control device
12 Dichroic mirror
120 Fluorescence observation camera
130 Fluorescence analysis device
210 Interference laser
220 Laser source
230 Polarizing beam splitter (PBS)
M1 to M2 Mirror
P1 to P3 Wave plate
13 Objective lens
14 Measurement light source
A Atom

**Claims**

1. A laser control device configured to control a phase of light output from a spatial light modulator configured to generate an optical tweezers array, based on a vibration frequency of a microparticle trapped by the optical tweezers array.

2. The laser control device according to Claim 1,

   wherein an intensity and the phase of the light output from the spatial light modulator are calculated using an expression for calculating an intensity and a phase of light,
   the expression includes a curvature adjustment value corresponding to the vibration frequency,
   a magnitude of the curvature adjustment value is changed based on a magnitude of the vibration frequency, and
   the expression includes an amplitude adjustment value that is changed with a change in the curvature adjustment value to keep a central intensity of each optical tweezer constant.

3. An optical tweezers generation system comprising:

   a laser light source;
   a focusing optical system configured to focus laser light from the laser light source to form an optical tweezers array configured to trap a microparticle;
   a measurement device configured to measure a vibration frequency of the microparticle based on fluorescence from the trapped microparticle; and
   a control device configured to control a phase of laser light output from a spatial light modulator disposed in the focusing optical system, based on the vibration frequency.

4. A laser control method comprising:
   controlling a phase of light output from a spatial light modulator configured to generate an optical tweezers array, based on a vibration frequency of a microparticle trapped by the optical tweezers array.

5. An optical tweezers generation method comprising:

   a step of forming an optical tweezers array configured to trap a microparticle by focusing laser light from a laser light source using a focusing optical system;
   a step of measuring a vibration frequency of the microparticle based on fluorescence from the microparticle trapped by the optical tweezers array; and
   a step of controlling a phase of laser light output from a spatial light modulator disposed in the focusing optical system, based on the vibration frequency.

6.  A program causing a computer to execute the laser control method according to Claim 4.

7.  A laser control device configured to control a phase of light output from a spatial light modulator configured to generate an optical tweezers array, based on a physical quantity of a microparticle trapped by the optical tweezers array.

8.  The laser control device according to Claim 1 or 7,
    wherein the laser control device controls the phase of the light output from the spatial light modulator configured to generate the optical tweezers array, based on a position, in a Z direction perpendicular to an XY plane, of the microparticle trapped by the optical tweezers array and disposed in the XY plane.

9.  The laser control device according to Claim 8,

    wherein an intensity and the phase of the light output from the spatial light modulator are calculated using an expression for calculating an intensity and a phase of light,
    the expression includes the position of the microparticle in the Z direction, and
    the expression includes an amplitude adjustment value that is changed with a change in the position in the Z direction to keep the position in the Z direction of each microparticle constant.

10. An optical tweezers generation system comprising:

    a laser light source;
    a focusing optical system configured to focus laser light from the laser light source to form an optical tweezers array configured to trap a microparticle;
    a measurement device configured to measure a physical quantity of the microparticle based on fluorescence from the trapped microparticle; and
    a control device configured to control a phase of laser light output from a spatial light modulator disposed in the focusing optical system, based on the physical quantity.

11. A laser control method comprising:
    controlling a phase of light output from a spatial light modulator configured to generate an optical tweezers array, based on a physical quantity of a microparticle trapped by the optical tweezers array.

12. An optical tweezers generation method comprising:

    a step of forming an optical tweezers array configured to trap a microparticle by focusing laser light from a laser light source using a focusing optical system;
    a step of measuring a physical quantity of the microparticle based on fluorescence from the microparticle trapped by the optical tweezers array; and
    a step of controlling a phase of laser light output from a spatial light modulator disposed in the focusing optical system, based on the physical quantity.

13. A program causing a computer to execute the laser control method according to Claim 11.

FIG. 1

FIG. 2

(a)

OPTICAL TWEEZERS
ARRAY

(b)

INTENSITY OF
LIGHT

POSITION

(c)

POTENTIAL

POSITION

FIG. 3

START

ACQUIRE VIBRATION
FREQUENCY OF
TRAPPED ATOM — S101

CONTROL ELECTRIC
FIELD OF LIGHT BASED ON
VIBRATION FREQUENCY — S102

S103

IS
CONTROL
PERFORMED PREDETERMINED
NUMBER OF
TIMES?

NO

YES

END

FIG. 4

FIG. 5

FIG. 6

FIG. 7

EP 4 782 391 A1

FIG. 8

FIG. 9

## FIG. 10

```
            START
              │
              │                              ◄──────┐
              ▼                                     │
    ┌──────────────────────┐                        │
    │  ACQUIRE VIBRATION    │                        │
    │    FREQUENCY OF       │ ～S201                  │
    │   TRAPPED ATOM        │                        │
    └──────────────────────┘                        │
              │                                      │
              ▼                                      │
    ┌──────────────────────┐                        │
    │  ACQUIRE POSITION OF  │                        │
    │    TRAPPED ATOM       │ ～S202                  │
    │    IN Z DIRECTION     │                        │
    └──────────────────────┘                        │
              │                                      │
              ▼                                      │
    ┌──────────────────────┐                        │
    │ CONTROL ELECTRIC FIELD OF │                    │
    │ LIGHT BASED ON VIBRATION  │ ～S203              │
    │ FREQUENCY AND POSITION    │                    │
    │    IN Z DIRECTION         │                    │
    └──────────────────────┘                        │
              │                  S204                │
              ▼                                      │
           ╱IS    ╲                                  │
          ╱ CONTROL ╲          NO                    │
         ◄ PERFORMED PREDETERMINED ├─────────────────┘
          ╲ NUMBER OF ╱
           ╲ TIMES? ╱
              │
             YES
              │
              ▼
            END
```

## INTERNATIONAL SEARCH REPORT

| International application No. |
|---|
| **PCT/JP2024/031511** |

### A. CLASSIFICATION OF SUBJECT MATTER

**B82B 3/00**(2006.01)i; **B82Y 10/00**(2011.01)i; **G02B 21/32**(2006.01)i; **G02F 1/01**(2006.01)i
FI: B82B3/00; B82Y10/00; G02F1/01 B; G02B21/32

According to International Patent Classification (IPC) or to both national classification and IPC

### B. FIELDS SEARCHED

Minimum documentation searched (classification system followed by classification symbols)

B82B3/00; B82Y10/00; G02B21/32; G02F1/01; G06N10/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | CN 112880912 A (ZHEJIANG UNIVERSITY) 01 June 2021 (2021-06-01) claims 1, 2, paragraphs [0005], [0058]-[0092], fig. 1-3 | 7-8, 10-13 |
| A | | 1-6, 9 |
| A | US 10983139 B1 (GOVERNMENT OF THE UNITED STATES, AS REPRESENTED BY THE SECRETARY OF THE AIR FORCE) 20 April 2021 (2021-04-20) entire text, all drawings | 1-13 |
| A | WO 2023/080936 A2 (HARVARD COLLEGE) 11 May 2023 (2023-05-11) entire text, all drawings | 1-13 |
| A | JP 2022-40896 A (HAMAMATSU PHOTONICS K.K.) 11 March 2022 (2022-03-11) entire text, all drawings | 1-13 |

☐ Further documents are listed in the continuation of Box C.　　☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 September 2024** | **08 October 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**INTERNATIONAL SEARCH REPORT**
**Information on patent family members**

International application No.

**PCT/JP2024/031511**

| Patent document cited in search report | | | Publication date (day/month/year) | Patent family member(s) | | | Publication date (day/month/year) |
|---|---|---|---|---|---|---|---|
| CN | 112880912 | A | 01 June 2021 | (Family: none) | | | |
| US | 10983139 | B1 | 20 April 2021 | US | 11085944 | B1 | |
| | | | | entire text, all drawings | | | |
| WO | 2023/080936 | A2 | 11 May 2023 | EP | 4371042 | A2 | |
| | | | | entire text, all drawings | | | |
| | | | | JP | 2024-526731 | A | |
| | | | | CA | 3223061 | A1 | |
| JP | 2022-40896 | A | 11 March 2022 | US | 2023/0281498 | A1 | |
| | | | | entire text, all drawings | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023152361 A

- JP 2023217754 A

**Non-patent literature cited in the description**

- **F. NOGRETTE** ; **H. LABUHN** ; **S. RAVETS** ; **D. BARREDO** ; **L. BEGUIN** ; **A. VERNIER** ; **T. LAHAYE** ; **A. BROWAEYS**. Single-Atom Trapping in Holographic 2D Arrays of Microtraps with Arbitrary Geometries. *Phys. Rev. X 4*, 23 May 2014, 021034